# EUROPÄISCHE PATENTANMELDUNG

(11) **EP 2 289 684 A1**
(43) Veröffentlichungstag der Anmeldung: **02.03.2011**
(21) Anmeldenummer: 09010990.1
(22) Anmeldetag: 27.08.2009
(51) Int. Cl.: B29C 44/32, B29C 44/46

(54) **Beschichten von Bauelementlagen, insbesondere zur Herstellung von Sandwichelementen**

(71) Anmelder: Siempelkamp Handling Systeme GmbH, 82515 Wolfratshausen (DE)
(72) Erfinder:
(74) Vertreter: Szynka, Dirk

(57) **Zusammenfassung**

Die Erfindung betrifft die Beschichtung einer Bauelementlage (9) mit zwei Auftragsvorrichtungen (11 und 12), die jeweils nur eindimensional bewegt werden.

## Beschreibung

Die vorliegende Erfindung bezieht sich auf die Herstellung von beschichteten Bauelementlagen, insbesondere bei der Herstellung von Sandwichelementen, und auf hierzu ausgelegte Vorrichtungen.

In vielen Anwendungsbereichen werden Bauelemente mit beschichteten Flächenmaterialien benötigt, insbesondere in Form von Sandwichelementen, also mit einer auf der anderen Seite des durch die Beschichtung aufgebrachten Materials vorgesehenen weiteren Flächenlage. Entsprechende Bauelemente können beispielsweise für Fertighauswände oder -bauteile oder andere Gebäudebauelemente einschließlich Türen, für LKW-Aufbauten, Containerwände und andere Anwendungen eingesetzt werden.

Insbesondere sind Sandwichelemente mit PUR/PIR-Schaumzwischenschichten zwischen Außenschichten bekannt, insbesondere zwischen Blechschichten. Bei der konventionellen Herstellung solcher Sandwichelemente wird das Schaummaterial bzw. eine hierzu ausreagierende Vorläuferflüssigkeit auf eine Flächenmateriallage aufgebracht, die hier als Bauelementlage bezeichnet wird. Dann wird die zweite Flächenmateriallage auf das Schaummaterial aufgebracht und der Verbund in eine sogenannte Doppelbandanlage eingefahren. Dies ist beispielsweise dargestellt in der EP 0 437 727 B1 und in der EP 1 145 768 B1. In der Doppelbandanlage wird eine vorgegebene Dicke des Sandwichelements senkrecht zu der Ebene der Bauelementlagen vorgegeben, indem das Sandwichelement zwischen zwei Gliederplattenbändem eingeschlossen und unter erhöhter Temperatur zur vollständigen Reaktion des Schaummaterials über eine bestimmte Strecke transportiert wird.

Zum Aufbringen des Schaummaterials bzw, seiner Vorläufeflüssigkeit dienen Auftragsvorrichtungen, die das Material über eine Austrittsöffnung auf die Bauelementlage von oben aufspritzen oder aufgießen. Der Austrittsöffnung einer Auftragsvorrichtung ist ein Mischkopf vorgeschaltet, in dem einzelne Komponenten etwa eines PUR/PIR-Reaktivgemisches vermischt werden. Diese Mischköpfe sind aufgrund der erforderlichen Mischgüte in ihrer Austragsleistung begrenzt. Die Mischgüte bestimmt die Qualität des fertigen Elementes. In der EP 1 145 768 B1 ist eine Auftragsvorrichtung beschrieben, wobei dort auf eine zweidimensionale Bewegung der Auftragsvorrichtung abgestellt wird, nämlich in der Querrichtung und in der Längsrichtung. Hiermit sollen in Kassetten optimierte Schaumauftragsmuster bzw. Verfahrwege der Auftragsvorrichtung erzielt werden, etwa um Fensterausschnitte geschickt zu umfahren. Dabei treten auch der Transportrichtung entgegengesetzte Bewegungen der Auftragsvorrichtung auf. Um dennoch mit hoher Geschwindigkeit arbeiten zu können, wird auch dargestellt, mit zwei Auftragsvorrichtungen nebeneinander zu arbeiten. Hierbei wird von Kassetten aus einer Bauelementlage und einem Rahmen im Außenrandbereich ausgegangen, wobei die Auftragsvorrichtungen zwischen diesen Kassetten "springen", also den Schaumauftrag dazwischen unterbrechen und erst in der folgenden Kassette wieder aufnehmen.

Die EP 0 437 727 B1 geht von zwei Auftragsvorrichtungen aus, von denen jeweils eine in Warteposition gehalten wird, um im Bedarfsfall die andere Auftragsvorrichtung einer Reinigung zuführen zu können und die wartende Auftragsvorrichtung direkt in Betrieb nehmen zu können, sodass der gesamte Beschichtungsprozess weiterlaufen kann.

Aufgabe dieser Erfindung ist, ein Beschichtungsverfahren und eine Beschichtungsvorrichtung nach dem Stand der Technik so weiter zu bilden, dass eine ökonomische, effektive und zuverlässige Betriebsweise erzielt wird, wobei der Schaum gleichmäßig auf der gesamten Elementbreite aufgetragen wird.

Die Aufgabe wird gelöst durch ein Verfahren zum Beschichten einer Bauelementlage mit einem Schaummaterial oder einer Vorläuferflüssigkeit dazu aus zumindest zwei Austrittsöffnungen einer jeweiligen Auftragsvorrichtung, wobei die Bauelementlage mit einer Fördereinrichtung in einer Längsrichtung gefördert wird und die Auftragsvorrichtungen gleichzeitig betrieben und dabei so bewegt werden, dass das Schaummaterial in Querrichtung verteilt wird, dadurch gekennzeichnet, dass die Auftragsvorrichtungen ausschließlich eindimensional bewegt werden, wobei zumindest eine Komponente der eindimensionalen Bewegung in der Querrichtung liegt, und eine dazu ausgelegte Vorrichtung zum Beschichten einer Bauelementlage gemäß einem Verfahren mit zumindest zwei Auftragsvorrichtungen mit einer jeweiligen Austrittsöffnung zum Auftragen eines Schaummaterials oder einer Vorläuferflüssigkeit dazu und einer Fördereinrichtung zum Fördern der Bauelementlage in einer Längsrichtung, wobei die Auftragsvorrichtungen dazu ausgelegt sind, in einem gleichzeitigen Betrieb so bewegt zu werden, dass das Schaummaterial in Querrichtung verteilt wird, dadurch gekennzeichnet, dass die Auftragsvorrichtungen ausschließlich eindimensional bewegbar sind.

Bevorzugte Ausgestaltungen sind in den abhängigen Ansprüchen angegeben und werden im Folgenden neben der Erfindung in ihrer allgemeinsten Form näher erläutert. Dabei soll kein expliziter Unterschied zwischen Verfahrensmerkmalen, Vorrichtungsmerkmalen und Verwendungsmerkmalen gemacht werden; vielmehr soll sich die gesamte folgende Offenbarung implizit auf alle Anspruchskategorien beziehen.

Wie in dem Stand der Technik EP 1 145 768 B1 geht die Erfindung vom gleichzeitiggen Betrieb zumindest zweier Auftragsvorrichtungen aus. Sie schlägt jedoch vor, die Auftragsvorrichtungen während des gemeinsamen Betriebs ausschließlich eindimensional, insbesondere in der Querrichtung, zu bewegen. Im Unterschied dazu hat der genannte Stand der Technik in einer zweidimensionalen Bewegung wesentliche Vorteile gesehen. Im Rahmen der vorliegenden Erfindung wurde jedoch erkannt, dass die zweidimensionale Bewegbarkeit erhebliche Nachteile mit sich bringt. Die in diesem Stand der Technik beschriebenen, in Längsrichtung beweglichen Portale, an denen in Querrichtung beweglich die Auftragsvorrichtungen angebracht sind, stellen relativ große bewegte Massen dar und sind daher hinsichtlich ihres Antriebes und ihrer Lagerung aufwendig. Zudem müssen die Antriebe und die Lagerungen für die Längsbeweglichkeit vor Verschmutzungen geschützt werden, insbesondere in Zusammenhang mit dem verwendeten Schaummaterial. Auch bilden diese Antriebe und Lagerungen einen weiteren Problempunkt hinsichtlich Wartung und Ausfallrisiko. Schließlich ist der beschriebene Aufwand insbesondere dann erheblich, wenn die Bewegungen auch in Längsrichtung schnell erfolgen sollen.

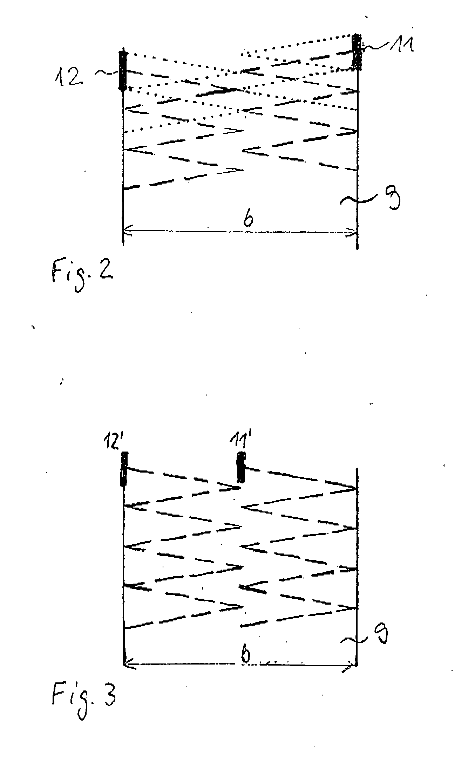

Demgegenüber geht die Erfindung davon aus, dass sich eine eindimensionale Bewegung insbesondere in Querrichtung, besonders einfach, zuverlässig und bedarfsgerecht schnell realisieren lässt. Beispielsweise können auch hier Portale mit daran verschiebbaren Auftragsvorrichtungen eingesetzt werden, wobei diese Portale im Betrieb allerdings feststehend bleiben. Die Querbewegungen wiederum sind mit relativ hoher Geschwindigkeit realisierbar, weil vergleichsweise kleine Massen bewegt werden. Insbesondere ist es auch bei vielen wichtigen Anwendungsfällen nicht nötig, wie im Fall des genannten Standes der Technik eine der Transportbewegung der Bauelementlage entgegengesetzte Bewegung mit der Auftragsvorrichtung durchzuführen, vergleiche die Verfahrwege in Figur 3 der genannten EP-Schrift.

Andererseits haben die Erfinder festgestellt, dass eine Kombination zweier Auftragsvorrichtungen gerade bei einer eindimensionalen Bewegung große Vorteile mit sich bringt. Dann können nämlich große Bauelementlagenbreiten und/oder hohe Fördergeschwindigkeiten der Fördereinrichtung ermöglicht werden, wie im Einzelnen noch ausgeführt wird. Insbesondere ist eine Vergrößerung der Bauelementlagenbreite ohne wesentliche oder ganz ohne Einbußen bei der Fördergeschwindigkeit von Interesse. Demgegenüber hat der genannte Stand der Technik aufgrund der relativ komplizierten Verfahrwege der einzelnen Auftragsvorrichtungen eine Kombination von zwei Auftragsvorrichtungen vorgeschlagen.

Der zweite genannte Stand der Technik, die EP 0 437 727 B1, hat zwar zwei Auftragsvorrichtungen mit lediglich eindimensionaler Beweglichkeit dargestellt, jedoch zu einem alternierenden Betrieb. Die Auftragsvorrichtungen ergänzen sich dort hinsichtlich gegenseitiger Ersetzung bei Reinigungsarbeiten an einer der beiden und werden nicht parallel betrieben.

Der Begriff der eindimensionalen Bewegung bzw. eindimensionalen Bewegbarkeit bezieht sich auf den Betrieb, d. h. auf den Beschichtungsprozess. Natürlich können die entsprechenden Halterungen der Auftragsvorrichtungen in einer oder zwei weiteren Dimension einstellbar sein, etwa um ihre Position relativ zur Bauelementlage justieren zu können oder ihren Abstand voneinander abstellen zu können. Dabei geht es aber um außerhalb des Beschichtungsprozesses vorzunehmende Einstellvorgänge, die während des Beschichtungsprozesses nicht stattfinden.

Die Bewegungen bzw. Bewegbarkeit sind vorzugsweise rein translatorisch; es handelt sich also vorzugsweise um reine Verschiebungen.

Weiterhin ist der Beschichtungsprozess vorzugsweise auf eine einheitliche durchgehende und für beide (oder alle) Auftragsvorrichtungen gemeinsame Bauelementlage gerichtet. Dabei liegen die beschichteten Bereiche vorzugsweise übereinander und überlappen dabei. Die Auftragsvorrichtungen beschichten also (zumindest weitgehend) die selben Bereiche auf der Bauelementlage und ergänzen sich dabei.

Auch wenn die Bereiche nicht überlappen, ist jedenfalls eine durchgehende Beschichtung der Bauelementlage bevorzugt, also die Herstellung einer jedenfalls über die Länge der Bauelementlage ununterbrochen durchgehenden Schicht.

Bei der Bauelementlage kann es sich insbesondere um einen kontinuierlichen Strang handeln, beispielsweise einen von einem so genannten Coil abgewickelten Blechstrang, wozu auf den zitierten Stand der Technik EP 0 437 727 B1 verwiesen wird. Dies bedeutet, dass die kontinuierliche Bauelementlage, insbesondere das Blech, bei der Beschichtung noch nicht in einzelne (bauelementbezogene) Abschnitte zerteilt sind.

Die Vorteile der Erfindung hinsichtlich einfachem und zuverlässigem Aufbau und Betrieb lassen sich weiter dadurch verstärken, dass auf Synchronansteuerungen der beiden Auftragsvorrichtungen zurückgegriffen wird, insbesondere steuerungstechnische Kopplungen. Dabei bewegen sich also beide Auftragsvorrichtungen nach demselben Bewegungsmuster aber versetzt und/oder spiegelbildlich symmetrisch. Dies kann insbesondere auch durch eine mechanische Kopplung zwischen beiden Auftragsvorrichtungen geschehen, wobei letztlich nur eine Antriebslösung notwendig ist. Auch hier sind natürlich Einstellungen zwischen den Auftragsvorrichtungen nicht ausgeschlossen sondern ist lediglich eine Kopplung während des Beschichtungsvorgangs gemeint.

Insbesondere können die Auftragsvorrichtungen so zueinander positioniert sein, dass sich zwischen ihnen ein Querabstand ergibt. Hierzu wird auf die Ausführungsbeispiele verwiesen. Dieser Querabstand kann mit einem Längsabstand kombiniert sein oder auch nicht.

Es wurde bereits erläutert, dass die Auftragsvorrichtungen vorzugsweise überlappende Bereiche auf der Bauelementlage beschichten, also durch jeweilige Auftragsvorrichtungen erzeugte Einzelschichten übereinanderliegen. Zudem kann vorgesehen sein, dass eine der Zahl der Auftragsvorrichtungen (n) entsprechende Zahl von Einzellagen (n) entsteht, also insbesondere bei zwei Auftragsvorrichtungen zwei Einzellagen abgeschieden werden. Damit kann eine besonders gute Flächendeckung erreicht werden, wie die Ausführungsbeispiele verdeutlichen. Insbesondere kann darauf verzichtet werden, dass die durch eine der Auftragsvorrichtungen abgeschiedene Schicht für sich schichtdickenhomogen ist, weil sie durch die Schichtdickenverteilung einer weiteren Schicht (einer) andere/n Auftragsvorrichtung(en) ausgeglichen wird.

Auch wenn auf die Beschichtung weitgehend überlappender Bereich auf der Bauelementlage durch die verschiedenen Auftragsvorrichtungen verzichtet wird, können die n Einzelschichten bei insgesamt n verschiedenen Auftragsvorrichtungen von Vorteil sein, und zwar auch im Hinblick auf die von jeder einzelnen Auftragsvorrichtung in ihrem eigenen Bereich erzeugten Schichten. Auch hierzu wird auf die Ausführungsbeispiele verwiesen.

Hinsichtlich der Ausgestaltung der Auftragsvorrichtungen selbst, insbesondere der Form und/oder Verteilung der Austrittsöffnungen, ist eine Längserstreckung in der Längsrichtung bevorzugt. Dazu könnten verschiedene Austrittsöffnungen in der Längsrichtung gereiht sein und/oder die Austrittsöffnungen als Langloch gestaltet sein. Jedenfalls soll erreicht werden, dass der insgesamt (pro Auftragsvorrichtung) austretende Materialstrom hinsichtlich seiner Querschnittsform in der Ebene der Bauelementlage in der Längsrichtung deutlich länger ist als in der Querrichtung. Die Ausführungsbeispiele verdeutlichen, dass damit nicht nur ein in Längsrichtung ausgedehnter Materialstreifen aufgetragen werden kann, sondern dabei auch, gerade in Verbindung mit den bevorstehenden Erläuterungen, besonders homogene Schichtdickenverteilungen erzielt werden können.

Bei solchen Auftragsvorrichtungen können sich bei reaktiven Materialien damit Probleme ergeben, dass die effektive Auftragsbreite während des Prozesses durch Verstopfungen eines Teils der Austrittsöffnungen (einzelne in einer Reihe oder eines Teils einer langgestreckten Öffnung) abnimmt. Dies kann kompensiert werden durch Erhöhung der Quergeschwindigkeit im Verhältnis zur Fördergeschwindigkeit. Üblicherweise geht man von einer konstanten Fördergeschwindigkeit aus, sodass dann die Quergeschwindigkeit entsprechend erhöht wird, um insgesamt eine gleichmäßige Bedeckung sicherzustellen.

Bei der Querbewegung bzw. der Querkomponente einer Bewegung der Auftragsvorrichtungen kann der an sich unerwünschte Effekt auftreten, dass infolge endlicher Verzögerungs- und Beschleunigungszeiten in der Nähe von Umkehrpunkten (am Rand der abgedeckten Breite) dort etwas größere Schichtdicken erzeugt werden als gewünscht. Vorzugsweise kann dem mit folgenden Maßnahmen begegnet werden: Zum einen kann die Auftragsvorrichtung etwas früher umkehren als vor Erreichen des Randes des eigentlich zu beschichtenden Bereichs auf der Bauelementlage. Damit erfasst also die Querbewegung die Breite der Bauelementlage zumindest an dieser Seite nicht ganz; vorzugsweise gilt das für beide Ränder. Die etwas überschüssige Materialmenge kann dann in diesen unbedeckten Randbereich ablaufen.

Zudem oder alternativ kann die Geschwindigkeitskomponente in der Querrichtung kurz vor Erreichen des Umkehrpunktes erhöht werden, ohne die pro Zeiteinheit auftretende Materialmenge an die erhöhte Geschwindigkeit anzupassen, sodass vor dem dem Umkehrpunkt entsprechenden Bereich eine etwas dünnere Materialschicht abgeschieden wird. Auch hier kann dann eine Egalisierung stattfinden. Zahlenwerte hierzu hängen natürlich davon ab, welche Beschleunigungen und Verzögerungen realisierbar sind und wie gut sich das aufgetragene Material verteilt, also insbesondere wie schnell es ausreagiert und damit seine Fließfähigkeit verliert. Größenordnungsmäßig könnte aber der hinsichtlich der Einstellung der Bewegung der Auftragsvorrichtung freigelassene Randbereich bei wenigen Prozent der Gesamtbreite der Bewegung der Auftragsvorrichtung liegen und gleichermaßen der schneller durchfahrene Bereich innerhalb des Umkehrpunktes ebenfalls bei einigen Prozent liegen.

Zwar steht die Erfindung wie erläutert im Gegensatz zu der EP 1 145 768 B1, allerdings nicht im Gegensatz zur EP 0 437 727 B1. Vielmehr lassen sich die technischen Vorschläge des letztgenannten Standes der Technik mit der vorliegenden Erfindung sinnvoll kombinieren, etwa indem vier Auftragsvorrichtungen vorgesehen sind, von denen jeweils zwei ein sich gegenseitig im Reinigungsfall ablösendes Paar gemäß diesem Stand der Technik bilden. Dabei bleiben ständig zwei Auftragsvorrichtungen in Betrieb, die dann erfindungsgemäß eindimensional bewegt werden. Statt einer Wiederholung wird zu weiteren Einzelheiten auf das genannte Dokument verwiesen. Bei dieser Gelegenheit sei betont, dass die vorliegende Erfindung grundsätzlich nicht auf die Anzahl zweier Auftragsvorrichtungen eingeschränkt ist, sondern auch mit drei oder mehr Auftragsvorrichtungen realisiert werden kann, für die dann vorzugsweise jeweils die Aussagen dieser Beschreibung gelten, insbesondere hinsichtlich der eindimensionalen Bewegung.

Wie eingangs bereits erwähnt richtet sich die Erfindung insbesondere auf den Bereich der Herstellung von Sandwichelementen verschiedene Anwendungen als Bauelemente. Hierzu wird auf die Einleitung verwiesen. Insbesondere ist dabei an Zwischenschichten aus PUR/PIR-Schaummaterialien, vorzugsweise auf Blech, gedacht. Dabei richtet sich die Erfindung bevorzugt auf einen kontinuierlichen Beschichtungsprozess wie in der EP 0 437 727 B1 im Unterschied zur Ausfüllung von Kassetten wie in der EP 1 145 768 B1, bei der der Beschichtungsvorgang zwischen den Kassetten unterbrochen werden muss, also nicht kontinuierlich ist. Solche Sandwichelemente können dann in einer an sich bekannten Doppelbandanlage ausreagieren, die der erfindungsgemäßen Vorrichtung in einer Produktionsstraße nachgeschaltet ist.

Im Folgenden wird die Erfindung anhand eines Ausführungsbeispiels näher erläutert, wobei die einzelnen Merkmale auch in anderen Kombinationen erfindungswesentlich sein können und sich, wie bereits erwähnt, implizit auf alle Kategorien der Erfindung beziehen.
- Figur 1: zeigt eine schematische Seitenansicht einer erfindungsgemäßen Vorrichtung zur Herstellung von Sandwichelementen.
- Figur 2 - Figur 5: zeigen schematische Draufsichten auf Bahnformen der Bewe- gung von Auftragsvorrichtungen in der Vorrichtung aus Figur 1 gemäß verschiedenen Ausführungsvarianten und jeweils in Be- zug auf die geförderte Bauelementlage.

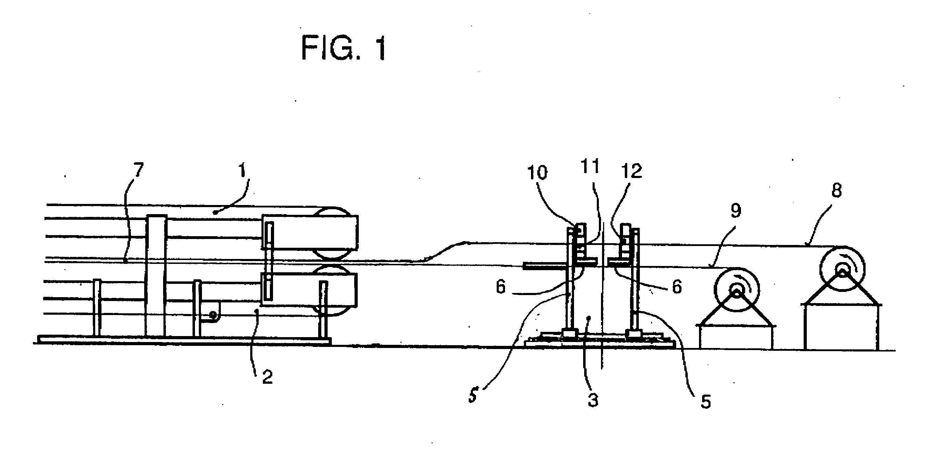

Figur 1 zeigt eine Vorrichtung zur Produktion von Sandwichelementen. Dazu enthält die Vorrichtung im in Figur 1 rechten Bereich zwei Träger für Blechcoils, von denen jeweils kontinuierliche Blechstränge 8 und 9 abgewickelt werden. Stromabwärts folgt eine Beschichtungsvorrichtung 3, die im Folgenden noch näher erläutert wird und auf den unteren Blechstrang 9 als Bauelementlage eine Zwischenlage aus PUR/PIR-Schaummaterial aufträgt.

Stromabwärts davon wird der obere Blechstrang 8 in einer nicht näher dargestellten Weise auf die Schaummaterialzwischenlage abgesenkt, sodass das Sandwichpaket aus den beiden Blechlagen 8, 9 und der dazwischen eingeschlossenen PUR/PIR-Schaumschicht in eine Doppelbandanlage links in Figur 1 eingeführt werden kann. Diese weist im Wesentlichen ein oberes Band 1 und ein unteres Band 2 auf, die synchron angetrieben werden und im Bereich eines Formhohlraums 7 den kontinuierlichen Sandwichstrang zwischen sich durchziehen. Dabei ist die Doppelbandanlage geheizt und hinsichtlich der Höhe des Zwischenraums 7 justiert. Weitere Einzelheiten zu der Gesamtvorrichtung in Figur 1 erübrigen sich, weil die Herstellung von Sandwichelementen unter Verwendung kontinuierlicher Blechstränge mit dazwischenliegender PUR/PIR-Schaumschicht und unter Einsatz einer Doppelbandanlage Stand der Technik und allgemein bekannt ist.

Allerdings ist die Beschichtungsvorrichtung 3 in besonderer Weise ausgestaltet und wird in besonderer Weise ausgestaltet und wird in besonderer Weise betrieben: Sie weist zwei portalartige Ständer 5 auf, an denen Auftragsvorrichtungen in Form von Mischköpfen 11 und 12 befestigt sind. Diese können in einer Richtung senkrecht zur Zeichenebene durch Servomotoren 10 bewegt werden. Ferner weisen die Auftragsvorrichtungen jeweils in der Längsrichtung, d. h. in Figur 1 in der Zeichenebene quer, als Reihe angeordnete Auslassöffnungen an einer jeweiligen Gießharke 6 auf, um das PUR/PIR-Material auf den Blechstrang 9 aufzubringen. Dabei sind an jedem der beiden Portalständer 5 je zwei Auftragsvorrichtungen 11 bzw. 12 angebracht, von denen nur eine dargestellt ist und die zweite senkrecht zur Zeichenebene versetzt angeordnet ist.

Im Unterschied zu dem bereits mehrfach zitierten Stand der Technik EP 0 437 727 B1 wechseln sich die beiden Auftragsvorrichtungen 11 bzw. 12 an demselben Portalträger 5 hinsichtlich Bereitschaftsstellung und Funktionsübernahme bei Reinigung der jeweils anderen ab. Die in dem Stand der Technik in Bezug auf Auftragsvorrichtungen an verschiedenen Portalträgern dargelegte Funktionsweise trifft vorliegend also für Auftragsvorrichtungen an demselben jeweiligen Portalträger, und zwar für beide Portalträger 5, zu. Eine Längsbewegung der Portalträger 5 entlang der Förderrichtung, in Figur 1 von rechts nach links, findet hier nicht statt. Vielmehr ist der Umschaltvorgang zwischen den beiden Auftragsvorrichtungen 11 bzw. 12 so schnell, dass der Rollenwechsel quasi instantan erfolgt und eine Mitbewegung längs der Förderrichtung aus diesen Gründen entfällt. Dementsprechend sind die beiden Portalträger 5 an der in Figur 1 erkennbaren Schienenkonstruktion auf dem Boden lediglich verstellbar im Sinne von auf bestimmte Abstände justierbar, jedoch nicht während des Betriebs (motorisch) bewegbar.

Für die Erfindung wichtig ist das Zusammenspiel der jeweils im Betrieb befindlichen Auftragsvorrichtung 11 bzw. 12 an den Portalträgem 5, das im Folgenden unter Bezugnahme auf die Figuren 2 bis 5 näher erläutert wird.

Figur 2 zeigt eine schematische Draufsicht auf die untere Bauelementlage, also den Blechstrang 9 aus Figur 1, und die relativ dazu von den Auftragsvorrichtungen 11 und 12 abgefahrenen Bahnen. Die Bahnen sind dabei gestrichelt gezeichnet und beziehen sich auf die jeweilige Mitte (in Längsrichtung) der Gießharken 6. Das Bezugssystem der Figur 2 ist mit dem Blechstrang 9 mitbewegt, sodass sich also die Auftragsvorrichtungen relativ dazu in der Figur 2 von oben nach unten bewegen. Im Bezug auf die Gesamtanlage, also den Boden, bewegt sich tatsächlich aber der Blechstrang 9, und zwar in Figur 2 von unten nach oben. Unten ist mit b die Breite des Blechstrangs 9 eingezeichnet.

Man erkennt an den gestrichelt eingezeichneten Linien, dass sich für beide Auftragsvorrichtungen ein Zick-Zack-Muster ergibt, das durch Überlagerung der Relativbewegung zwischen den Auftragsvorrichtungen 11 und 12 und dem Blechstrang 9 einerseits und einer Hin-und-her-Bewegung der Auftragsvorrichtungen 11 und 12 in Querrichtung ergibt. Dabei sind Umkehrpunkte jeweils spitz gezeichnet, was etwas idealisiert ist. Tatsächlich gibt es natürlich einen endlichen Abbrems- und Wiederbeschleunigungsvorgang, sodass die Umkehrpunkte der Zick-Zack-Linien eigentlich etwas verrundet sein müssten.

Das Grundschema wird jedoch deutlich, nämlich dass jeweils eine Auftragsvorrichtung 11 bzw. 12 hinsichtlich der Bewegung (des Mittelpunkts) der Gießharke 6 die Hälfte der Breite b des Blechstreifens 9 abdeckt. Die Gießharken 6 tragen dabei das Schaummaterial in einem breiteren Streifen auf, dessen Ränder durch die punktierten Linien angedeutet sind, allerdings nur im oberen Bereich der Figur 2, sodass sich insgesamt eine weitgehend homogene Flächenbedeckung ergibt. Man kann sich dabei vorstellen, dass beispielswiese die Auftragsvorrichtung 12 auf ihrer ersten eingezeichneten Bahn (von links oben nach rechts in die Bandmitte und dabei etwas nach unten) läuft, dann umgekehrt und auf dem Rückweg schließlich eine Position erreicht, in der sie unmittelbar neben ihrer eingezeichneten Position liegt. Dabei hätte sie ein mit der Spitze links und mit der Basis rechts angeordnetes gleichschenkliges Dreieck doppelt abgedeckt, wobei man sich leicht veranschaulicht, dass im weiteren Verlauf eine flächendeckende Doppelbedeckung entsteht, also das Schaummaterial durch die Auftragsvorrichtung 12 in zwei Einzellagen abgeschieden wird. Dabei liegen jeweils parallelogrammartige Streifen aneinander, und zwar in einer Lage solche mit Längskanten von links oben nach rechts unten und in einer zweiten Lage solche mit Längskanten von links unten nach rechts oben. Analoges gilt für das Auftragsmuster der Auftragsvorrichtung 11 rechts daneben.

Man erkennt ferner, dass die Auftragsvorrichtung 11 etwas oberhalb, also in Bezug auf Figur 1 links, von der Auftragsvorrichtung 12 angeordnet ist. Bei diesem Ausführungsbeispiel werden beide völlig unabhängig voneinander angesteuert und könnten im Prinzip auch voneinander abweichende geometrische Muster ausführen. Die Auftragsvorrichtungen 11 und 12 sind an verschiedenen Portalträgern 5 befestigt und werden von verschiedenen motorischen Antrieben bewegt. Grundsätzlich würde sich aber bereits hier eine Kopplung, nämlich eine steuerungstechnische Kopplung, durchführen lassen, sodass die beiden dargestellten Zick-Zack-Muster aus derselben Steuerung resultieren, wobei eine Vorzeichenumkehrung hinsichtlich der Querrichtung erfolgt und der Längs- und der Querversatz zwischen den Zick-Zack-Linien im Übrigen auf die bauliche Beabstandung zurückgeht. Es handelt sich zwar um eine gegenläufige, aber nichtsdestotrotz synchrone Bewegung.

Figur 3 zeigt ein weiteres Ausführungsbeispiel, bei dem im Unterschied zu Figur 2 und Figur 1 unterstellt wird, dass zwei Auftragsvorrichtung 11' und 12' an ein und demselben Portalträger 5' montiert sind. Dies könnte insbesondere dann der Fall sein, wenn die im Hinblick auf Figur 1 erläuterte Doppelausstattung jedes Portalträgers 5 mit zwei Auftragsvorrichtungen gemäß EP 0 437 727 B1 nicht realisiert wird. Auch hier decken die beiden Auftragsvorrichtungen 11' und 12' mit jeweiligen Zick-Zack-Linien jeweils die Hälfte der Breite b des Blechstreifens 9 doppelt ab. Für eine steuerungstechnische Kopplung gilt das zu Figur 2 gesagte, wobei hier keine Vorzeicheninversion hinsichtlich der Querrichtung nötig wäre und baulich nur ein Querversatz existiert. Hinsichtlich der durch die Gießharken 6 abgeschiedenen Streifen gelten die Ausführungen zu Figur 2, wobei die punktierten Linien nicht eingezeichnet sind. Umgekehrt entspricht das Muster der Gießharkenmittelpunkte mit den gestrichelten Linien bis auf einen Phasenversatz dem in Figur 2.

Darüberhinaus lassen sich die beiden Auftragsvorrichtungen 11' und 12' bei diesem Ausführungsbeispiel sehr leicht mechanisch fest koppeln. Es ist also nur noch ein einziger motorischer Antrieb notwendig, wobei die Auftragsvorrichtungen beispielsweise durch eine Querstange beabstandet sind, die insgesamt mitbewegt wird, oder an einem Seilzugsystem mit einem festen Abstand montiert sind. Im Prinzip wäre hier sogar eine einzige Auftragsvorrichtung mit lediglich zwei entsprechend beabstandeten Gießharken 6 denkbar, wobei die dann relativ großen Abstände zwischen den Mischköpfen (10 in Figur 1) und den Gießharken 6 nachteilig wären.

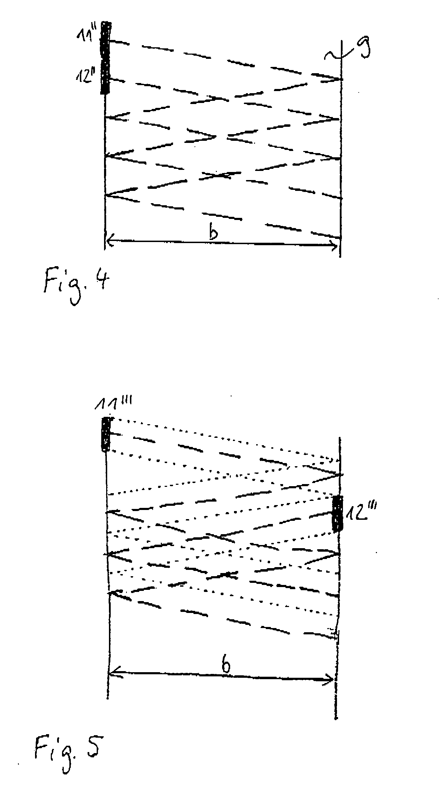

Figur 4 zeigt ein weiteres Ausführungsbeispiel, dass wiederum von Figur 1 und Figur 2 abweicht. Hier soll demonstriert werden, dass die Erfindung keinen Querabstand zwischen den Auftragsvorrichtungen 11" und 12" voraussetzt; vielmehr ist hier eine Anordnung in Längsrichtung vorgesehen. Dabei müssen hier beide Auftragsvorrichtungen 11" und 12" die Breite b abdecken. Zwischen den Stellen auf dem Blechstreifen 9, an denen die Gießharke einer jeweiligen (selben) Auftragsvorrichtung dieselbe Kante oder allgemeiner gesprochen Querposition auf dem Blechstreifen 9 erreicht, besteht aber im Vergleich zu den vorherigen Beispielen ein Längsabstand. Die Auftragsvorrichtungen 11" und 12" können also mit denselben Quergeschwindigkeiten bewegt werden. Umgekehrt lassen sich mit denselben baulich realisierbaren Geschwindigkeiten in Querrichtung dieselben relativ hohen Fördergeschwindigkeiten für relativ breite Blechstreifen 9 erreichen. Bei diesem Beispiel können die Auftragsvorrichtungen wieder an zwei verschiedenen Portalträgern montiert sein, allerdings auch nur an einem einzigen Portalträger und dabei auch fest aneinander montiert.

Diese Lösung ist nicht äquivalent zu einer Verdopplung der Länge einer Gießharke in Längsrichtung, weil die Länge einer Gießharke begrenzt ist. Sie setzt sich an den distalen Öffnungen beginnend mit der Zeit sogar etwas zu. Ferner sind die jeweiligen Mischköpfe in ihrem maximalen Durchsatz begrenzt. Bei diesem Ausführungsbeispiel sind also zwei getrennte Auftragsvorrichtungen 11" und 12" mit jeweils eigenem Mischkopf und eigener Gießharke vorgesehen, die sozusagen "Rücken an Rücken" montiert sind. Bei einem eventuellen Zusetzen von Gießharkenenden geschieht dies damit bei der oberen Auftragsvorrichtung 11" am oberen Ende und bei der unteren Auftragsvorrichtung 12" am unteren Ende, sodass lediglich die gemeinsame Gesamtbreite des aufgetragenen Streifens abnimmt, aber kein Streifen dazwischen entsteht.
Figur 5 zeigt ein letztes Ausführungsbeispiel mit zwei Auftragsvorrichtung 11"' und 12"', die wie in Figur 2 einen Längsabstand haben und in Querrichtung gegensinnig bewegt werden, dabei aber über jeweils die gesamte Breite b wie in Figur 4. Die beiden Auftragsvorrichtungen 11"' und 12"' sind hierbei an verschiedenen Portalträgem angebracht. Wieder sind zur illustration gepunktet die ungefähren Begrenzungen der abgedeckten Streifen für das erste "V" der jeweiligen Zick-Zack-Bewegung eingezeichnet. Man erkennt hier, dass jede Auftragsvorrichtung 11"' bzw. 12"' für sich kein flächendeckendes Muster mehr erzeugt, aber beide gemeinsam sowohl flächendeckend beschichten als auch insgesamt zwei Einzellagen erzeugen.

Zur Ansteuerung gilt das zu Figur 2 gesagte. Im Übrigen würde sich vorrichtungsmäßig das Muster aus Figur 2 auch mit der Vorrichtung gemäß Figur 5 realisieren lassen und umgekehrt, wobei der Längsabstand einstellbar sein müsste und zur Realisierung von Figur 5 sichergestellt sein müsste, dass jede Auftragsvorrichtung die gesamte Breite erreichen kann.

Für alle Ausführungsbeispiele gilt, dass die Aufteilung des Auftrags auf zwei Auftragsvorrichtungen bei vorgegebenen maximalen Querbewegungsgeschwindigkeiten eine Verdoppelung der Blechstreifenbreiten oder eine Verdoppelung der Fördergeschwindigkeiten des Blechstreifens oder eine Erhöhung sowohl der Blechstreifenbreiten wie der Fördergeschwindigkeiten erlaubt. Sinngemäß gilt das natürlich auch für eine Aufteilung auf mehr als zwei Auftragsvorrichtungen, wobei auch dann eine Kombination mit dem Grundgedanken der EP 0 437 727 B1 möglich wäre wie anhand Figur 1 erläutert.

Für alle Ausführungsvarianten gilt, dass die Querbewegungsgeschwindigkeit während des Betriebs variabel sein kann, insbesondere langsam erhöht werden kann. Dies hat den Hintergrund, dass sich insbesondere bei PUR/PIR-Systemen und relativ langen Gießharken 6 mit der Zeit die distalen Austrittsöffnungen in den horizontalen Schenkeln der Gießharken 6 zusetzen können und damit die effektive Auftragsbreite in Längsrichtung abnimmt. Wenn nun die Quergeschwindigkeit erhöht wird (bei wegen der angeschlossenen Doppelbandanlage in der Regel konstanter Transportgeschwindigkeit des Blechstreifens 9), werden gewissermaßen die Winkel der schrägen Linien in den Figuren 2ff spitzer, und zwar genau so, dass sich insgesamt nach wie vor eine gleichmäßige (doppelte) Flächendeckung ergibt. Dies kann beispielsweise durch Beobachtung und Nachstellen seitens einer Bedienperson erfolgen, bei verlässlichen empirischen Werten aber auch programmiert sein.

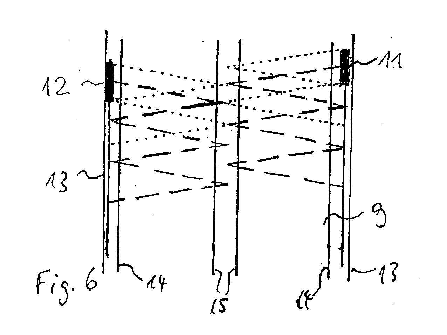

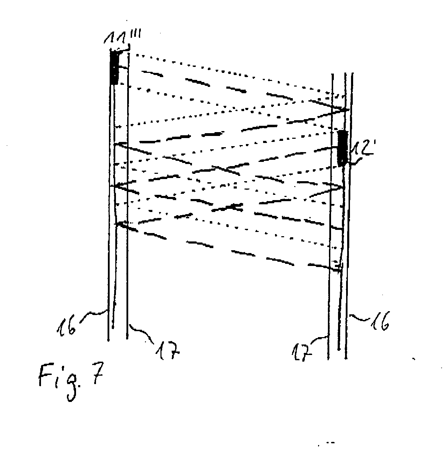

Darüberhinaus zeigen die Figuren 6 und 7 Ausführungsbeispiele entsprechend den Figuren 2 und 5 mit zusätzlichen vertikalen Linien 13 bis 17. Dabei liegen die Linien 13 in Figur 6 außerhalb der in Figur 2 erkennbaren seitlichen Begrenzungen des Blechstreifens 9. Diese außerhalb liegenden Linien 13 sind die tatsächlichen körperlichen Grenzen des Blechstreifens 9 bei diesem Ausführungsbeispiel, die etwas weiter innen liegenden vertikalen Striche bilden dementsprechend etwas nach innen gerückte Grenzen des von den Auftragsvorrichtungen 11 und 12 abgefahrenen Bereichs. Der Querversatz beträgt pro Seite größenordnungsmäßig 3 %, was aber nur eine ganz unverbindliche Zahl darstellt, die je nach realisierbaren Verzögerungen und Beschleunigungen der Auftragsvorrichtung 11 und 12 angepasst werden kann.

Weiterhin liegen in Figur 6 innerhalb der Begrenzungslinien der Bewegungsmuster zusätzliche vertikale Linien 14. Außerhalb dieser Linien 14 fahren die Auftragsvorrichtungen 11 und 12 etwas schneller, und zwar größenordnungsmäßig 10 % bis 20 % schneller, sodass sich hier eine etwas dünnere Schicht ergibt. Entsprechende Linien finden sich in der Mitte, und zwar mit 15 bezeichnet. Die Auftragsvorrichtung 11 fährt links von der entsprechenden mittleren Linie 15 schneller, die Auftragsvorrichtung 12 rechts von der entsprechenden Linie 15 auf ihrer Seite.

Insgesamt können damit Wulstbildungen im Bereich der Umkehrpunkte, also der bereits in Figur 2 eingezeichneten vertikalen Linien sowie der Mittellinie, vermieden werden. An den äußeren Rändern läuft das überschüssige Material im Bereich der Umkehrpunkte nach außen in den freigelassenen Streifen und auch nach innen in den wegen der erhöhten Geschwindigkeit etwas dünner beschichteten Bereich. Analog verteilt sich das überschüssige Material auch in der Mitte. Dabei können die Abstände der Linien 14 von den Begrenzungslinien der Bewegungsmuster etwa 5 % der Gesamtbreite des Blechstreifens 9 betragen und kann der Abstand zwischen den beiden Linien 15 und der Mitte etwa 15 % dieser Gesamtbreite betragen.

Ganz analoge Bedeutung haben die Linien 16 und 17 in Figur 5, wobei dort nicht zwischen den beiden Auftragsvorrichtung 11"' und 12"' unterschieden werden muss, was die Ränder angeht, und die Wulstproblematik in der Mitte wegfällt.

## Patentansprüche

1. Verfahren zum Beschichten einer Bauelementlage (9)
mit einem Schaummaterial oder einer Vorläuferflüssigkeit dazu aus zumindest zwei Austrittsöffnungen (6) einer jeweiligen Auftragsvorrichtung (11, 12),
wobei die Bauelementlage (9) mit einer Fördereinrichtung in einer Längsrichtung gefördert wird
und die Auftragsvorrichtungen (11, 12) gleichzeitig betrieben und dabei so bewegt werden, dass das Schaummaterial in Querrichtung verteilt wird,
**dadurch gekennzeichnet, dass** die Auftragsvorrichtungen (11, 12) ausschließlich eindimensional bewegt werden, wobei zumindest eine Komponente der eindimensionalen Bewegung in der Querrichtung liegt.

2. Verfahren nach Anspruch 1, bei dem die Bauelementlage (9) ein kontinuierlicher Strang, insbesondere ein kontinuierlicher Blechstrang, ist.

3. Verfahren nach Anspruch 1 oder 2, bei dem die beiden Auftragsvorrichtungen (11, 12) eine gemeinsame Bauelementlage (9) durchgehend beschichten.

4. Verfahren nach einem der vorstehenden Ansprüche, bei dem die von den jeweiligen Auftragsvorrichtungen (11, 12) beschichteten Bereiche auf der Bauelementlage (9) übereinander liegen.

5. Verfahren nach einem der vorstehenden Ansprüche, bei dem die beiden Auftragsvorrichtungen (11, 12) synchron miteinander bewegt werden.

6. Verfahren nach einem der vorstehenden Ansprüche, bei dem n Auftragsvorrichtungen (11, 12) vorgesehen sind, insbesondere 2, und die n Auftragsvorrichtungen (11, 12) die Bauelementlage (9) insgesamt mit n Einzellagen des Schaummaterials beschichten.

7. Verfahren nach einem der vorstehenden Ansprüche, bei dem die Auftragsvorrichtungen (11, 12) einen Materialstrom abgeben, der in der Längsrichtung länger ist als in der Querrichtung, insbesondere durch eine Reihe von Austrittsöffnungen (6) in der Längsrichtung.

8. Verfahren nach Anspruch 7, bei dem eine Quergeschwindigkeit der Bewegung der Auftragsvorrichtungen (11, 12) während des laufenden Verfahrens bei gleichbleibender Geschwindigkeit der Längsförderung der Bauelementlage (9) erhöht wird, um eine durch Verstopfung eines Teils der Austrittsöffnungen (6) entstehende Verringerung der effektiven Auftragsbreite zu kompensieren.

9. Verfahren nach einem der vorstehenden Ansprüche, bei dem eine Querbewegung der Auftragsvorrichtungen (11, 12) die Breite der Bauelementlage (9) in der Querrichtung nicht ganz erfasst.

10. Verfahren nach einem der vorstehenden Ansprüche, bei dem die Geschwindigkeitskomponente in der Querrichtung jeder Auftragsvorrichtung (11, 12) vor Erreichen eines Umkehrpunktes in der Querrichtung erhöht wird, um eine Schichtdickenvergrößerung an dem Umkehrpunkt zu kompensieren.

11. Verfahren nach einem der vorstehenden Ansprüche mit zumindest vier Auftragsvorrichtungen (11, 12), von denen je zwei ein Paar bilden, wobei während des Verfahrens je eine Auftragsvorrichtung (11, 12) jedes Paares in Betrieb ist und die jeweils andere in Bereitschaft bleibt und bei Erfordernis einer Reinigung einer Auftragsvorrichtung (11, 12) zwischen den beiden Auftragsvorrichtungen (11, 12) eines Paares umgeschaltet wird, ohne das Verfahren insgesamt zu unterbrechen.

12. Verfahren zum Herstellen eines Sandwichelements aus einer unteren (9) und einer oberen (8) Deckschicht und einer Zwischenschicht zwischen den Deckschichten (8, 9), beinhaltend ein Verfahren nach einem der vorstehenden Ansprüche zum Aufbringen des Schaummaterials der Zwischenschicht.

13. Verfahren nach Anspruch 12, insbesondere in Verbindung mit Anspruch 2 oder 3, bei dem die beiden Deckschichten (8, 9) mit der Zwischenschicht dazwischen nach dem Beschichten gemäß Anspruch 1 in eine Doppelbandanlage (1, 2) eingefahren werden.

14. Vorrichtung zum Beschichten einer Bauelementlage (9) gemäß einem Verfahren nach einem der vorstehenden Ansprüche mit
zumindest zwei Auftragsvorrichtungen (11, 12) mit einer jeweiligen Austrittsöffnung (6) zum Auftragen eines Schaummaterials oder einer Vorläuferflüssigkeit dazu und
einer Fördereinrichtung zum Fördern der Bauelementlage (9) in einer Längsrichtung,
wobei die Auftragsvorrichtungen (11, 12) dazu ausgelegt sind, in einem gleichzeitigen Betrieb so bewegt zu werden, dass das Schaummaterial in Querrichtung verteilt wird,
**dadurch gekennzeichnet, dass** die Auftragsvorrichtungen (11, 12) ausschließlich eindimensional bewegbar sind.

15. Verwendung einer Vorrichtung nach Anspruch 14 für ein Verfahren nach einem der Ansprüche 1 bis 13.
